# EUROPÄISCHE PATENTSCHRIFT

(11) **EP 2 562 579 B1**
(45) Veröffentlichungstag und Bekanntmachung des Hinweises auf die Patenterteilung: **18.12.2019**
(21) Anmeldenummer: 12181448.7
(22) Anmeldetag: 23.08.2012
(51) Int. Cl.: G02B 23/16, H01M 10/42

(54) **Fernoptisches Gerät mitBatteriefach-Adapter zur Datenübertragung**
Long range optical device comprising battery compartment adapter for data transfer
Appareil optique à distance comprenant adaptateur localisé dans le compartiment à batterie pour le transfert de données

(30) Priorität: 24.08.2011 AT 12142011
(43) Veröffentlichungstag der Anmeldung: 27.02.2013
(73) Patentinhaber: Swarovski-Optik KG., 6067 Absam (AT)
(72) Erfinder: Roider, Konrad, 6068 Mils (AT); Hermann, Herbert, 6060 Hall (AT)
(74) Vertreter: Burger, Hannes

(56) Entgegenhaltungen:
- DE-A1- 10 115 854
- US-A- 4 961 230
- US-A1- 2003 151 660
- US-A1- 2003 181 226
- US-A1- 2004 263 117
- US-A1- 2005 001 586
- US-A1- 2006 046 779

## Beschreibung

Die Erfindung betrifft eine fernoptische Vorrichtung mit zumindest einem austauschbaren elektrischen Energiespeicher zur Stromversorgung der fernoptischen Vorrichtung, wobei der Energiespeicher in einem verschließbaren, elektrische Kontakte aufweisenden Fach der Vorrichtung angeordnet ist.

Darüber hinaus betrifft die Erfindung ein Verfahren zum Betrieb einer fernoptischen Vorrichtung der eingangs genannten Art mit einem Adapter.

Unter einer fernoptischen Vorrichtung werden in diesem Dokument optische Abbildungssysteme verstanden, welche eine vergrößerte Abbildung über größere Distanzen entfernte Objekte ermöglichen, wie beispielsweise Ferngläser, Teleskope, optische Ziel- und Peilvorrichtungen.

Aus der DE10338668A1 ist eine fernoptische Vorrichtung der eingangs genannten Art in Form eines binokularen Fernglases mit einer Fotografierfunktion bekannt geworden. Das bekannte Fernglas weist einen Grundgehäuseteil mit einem Batteriefach auf. Zum Auslesen von Bilddaten ist ein äußerer Anschluss, auf einer gedruckten Schaltung einer Stromversorgungseinheit vorgesehen sein, der als Loch in einer Wand des Grundgehäuseteils ausgebildet ist, sodass ein externes Datenverarbeitungsgerät angeschlossen werden kann. Eine weitere Vorrichtung der eingangs genannten Art ist aus der US 2003/151660 A1 bekannt geworden. Die US 2005/001586 A1 hat einen Akku-Pack zum Gegenstand, der das Speichern von Statusinformationen eines elektronischen Gerätes in einem Speicher des Akku-Packs ermöglicht, während sich dieser in dem Gerät befindet. Wird der Akku-Pack aus dem Gerät entnommen und geladen stehen dann nach dem Einsetzen des geladenen Batteriepacks wieder die letztgültigen Statusinformationen zur Verfügung. Die DE 101 15 854 A1 bezieht sich auf eine fernoptische Einrichtung, bei welcher eine externe Speicherkarte in eine Schnittstelle eingesetzt werden kann. Die US 2006/046779 A1 betrifft ein Mobiltelefon, bei welchem ein Modul in das Batteriefach eingesetzt werden kann. Dieses Modul besteht aus einem Batteriepack und einem integrierten Schaltkreis zur Erweiterung des Funktionsumfangs des Mobiltelefons. Die US 2003/181226 A1 betrifft eine Batterie für ein Mobilfunkgerät und die US 2004/263117A1 einen Akku-Pack mit eingebauter Kommunikationsschnittstelle. Weiterer Stand der Technik ist in US4961230 beschrieben.

Nachteilig an den bekannten fernoptischen Vorrichtungen ist vor allem, dass eine Datenübertragung zwischen dem über einen relativ ungeschützten Anschluss in der Außenwand des Grundgehäuseteils erfolgen muss. Ein Schutz gegen Verschmutzung und Nässe dieses Anschlusses ist daher nur sehr eingeschränkt gegeben. Ein weiterer Nachteil der bekannten Ausführungsform besteht darin, dass eine Erweiterung des Funktionsumfangs der fernoptischen Vorrichtung nicht möglich ist.

Es ist daher eine Aufgabe der Erfindung, auf möglichst einfache Weise einen guten und zuverlässigen Schutz vor Verschmutzung und Beschädigung des Datenübertragungsanschlusses zu gewährleisten und gleichzeitig auch die Möglichkeit zu schaffen, den Funktionsumfang einer fernoptischen Vorrichtung auf einfache Weise erweitern zu können.

Diese Aufgabe wird mit einer Vorrichtung der eingangs genannten Art erfindungsgemäß durch die Merkmale des kennzeichnenden Teils von Anspruch 1 gelöst.

Die erfindungsgemäße Lösung erlaubt es, auf besonders einfache Weise einen in dem Fach des Energiespeichers befindlichen Anschluss zum Datenaustausch während einer Verwendung der fernoptischen Vorrichtung vor Nässe und anderen Umwelteinflüssen abzuschirmen sowie durch den Einsatz eines Adapters einen Datenaustausch mit der fernoptischen Vorrichtung zu erleichtern. Mittels des Adapters lässt sich auch der Funktionsumfang der fernoptischen Vorrichtung leicht erweitern, beispielsweise durch in dem Adapter abgelegter Software oder Daten.

Die erfindungsgemäße Lösung hat auch den Vorteil, dass der Anschluss zur Datenübertragung in einem eingelegten Zustand des Energiespeichers, beispielsweise einer Batterie, von dem Energiespeicher abgedeckt und so noch besser geschützt ist. Darüber hinaus hat diese Ausführungsform der Erfindung den Vorteil, dass der Datenanschluss leicht durch einen entsprechenden Adapter kontaktiert werden kann, da hierfür nur ein Einstecken des Adapters in das Fach erforderlich ist.

Unter einem "im wesentlichen formstabilen Gehäuse" wird hierbei ein Gehäuse verstanden, dessen Form entweder nicht zerstörungsfrei verändert werden kann oder dessen Form nach Wegfallen einer das Gehäuse nicht zerstörenden äußeren Deformationskraft von selbst wieder seine ursprüngliche Form annimmt. Als Materialien für das Gehäuse kommen neben Metallen und Kunststoffen somit beispielsweise auch Kautschuk oder Gummi in Frage. Durch das formstabile Gehäuse wird ein Kontaktieren eines in dem fernoptischen Vorrichtung versenkt angeordneten Anschlusses wesentlich erleichtert, da aufgrund des formstabilen Gehäuses eine korrekte Ausrichtung der Kontaktstelle des Adapters in Bezug auf den Anschluss der fernoptischen Vorrichtung einfach durchzuführen ist. Die Handhabung des Adapters wird durch die Führungsfläche, welche mit Seitenwänden einer Vertiefung, in welcher der Anschluss angeordnet ist, zusammenwirken kann, weiter wesentlich verbessert.

Durch die Verwendung eines Adapters ist auf einfache Weise eine Verbindung zwischen dem in dem Fach der Vorrichtung geschützt angeordneten Anschluss und einem externen Datenverarbeitungsgerät, beispielsweise einem PC, herstellbar.

Gemäß einer weiteren Ausführungsform der Erfindung kann die Vorrichtung ein mit dem Anschluss zur Datenübertragung verbundenes Bussystem aufweisen. Durch Verwendung des Bussystems lassen sich einzelne elektronische Komponenten der Vorrichtung, wie beispielsweise ein Entfernungsmessgerät, eine Steuerung zur Einstellung von Verschlusszeiten und Blendengrößen, Speicher zum Ablegen von Bilddaten, etc. über einen gemeinsamen Übertragungsweg ansteuern. Über den Anschluss zur Datenübertragung kann auf das Bussystem und die internen Daten und Einstellungen der Vorrichtung zugegriffen werden. Einem externen, auf das Bussystem zugreifenden Gerät kann beispielsweise ein Schreib/Lesezugriff auf das Bussystem gewährt werden.

Eine weitere sehr vorteilhafte Ausführungsform der Erfindung sieht vor, dass der Anschluss zur Datenübertragung als eine Ein-Draht-UART-Schnittstelle ausgebildet ist. Dies hat den Vorteil, dass neben einer Masseleitung mit einer Datenader das Auslangen gefunden werden kann, die sowohl als Stromversorgung als auch als Sende- und Empfangsleitung genutzt werden kann. Diese Variante der Erfindung zeichnet sich somit durch einen relativ einfachen Aufbau aus. Alternativ zur Verwendung einer Ein-Draht-UART-Schnittstelle könnte gemäß einer anderen Variante der Erfindung der Anschluss zur Datenübertragung auch als USB-Anschluss ausgebildet sein.

Eine besonders günstige Variante der Erfindung, welche sich durch eine optimale Ausnutzung des zur Verfügung stehenden Einbauraums auszeichnet, sieht vor, dass das Fach als verschließbares Fach in einem Fokussierknopf der fernoptischen Vorrichtung angeordnet ist.

Eine ebenfalls sehr vorteilhafte Weiterbildung der erfindungsgemäßen Vorrichtung sieht vor, dass die fernoptische Vorrichtung einen Motor zur Veränderung von Schärfeeinstellungen, insbesondere zur Dioptrienanpassung des Okulars, aufweist. Dies ermöglicht, die Realisierung einer sehr einfachen und komfortablen Schärfeinstellung der fernoptischen Vorrichtung. Darüber hinaus kann durch die Verwendung eines Motors ein Verwackeln der fernoptischen Vorrichtung beim Einstellen der Schärfe, wie es bei einem manuellen Einstellen leicht der Fall sein kann, vermieden werden.

Eine besonders günstige Variante, welche die Realisierung unterschiedlicher Zusatzfunktionen der fernoptischen Vorrichtung ermöglicht, sieht vor, dass die dazu eingerichtet ist, Funktionen auszuführen, welche in dem Adapter als Software implementiert oder mittels zumindest einer elektronischen Schaltung realisiert sind. So können mit dem Adapter beispielsweise Soft- und/oder Hardware vorgesehen sein, mit welcher die fernoptische Vorrichtung Geschwindigkeitsmessungen und/oder Voluminamessungen von beobachteten Objekten durchführen kann. Weiters kann der Adapter für eine Optical Free Space Communication oder als Gegenstelle für eine Fernbedienung der fernoptischen Vorrichtung ausgebildet sein. Darüber hinaus kann der Adapter als Akku Pack oder auch als Sicherheits-Dongle für die fernoptische Vorrichtung realisiert sein.

Eine mechanisch besonders stabile Verbindung zwischen der Vorrichtung und dem Adapter lässt sich dadurch erzielen, dass die äußere Kontur des in das Fach einsetzbaren Abschnittes einer negativen Form des Faches entspricht.

Eine sehr gute Bedienbarkeit des Adapters lässt sich dadurch erzielen, dass der Adapter einen Grundkörper mit einem im wesentlichen T-förmigen Querschnitt aufweist.

Eine besonders einfache Verbindung des Adapters zu dem externen Datenverarbeitungsgerät lässt sich dadurch erzielen, dass die Schnittstelle des Adapters zur Verbindung mit dem externen Datenverarbeitungsgerät eine USB-Schnittstelle, insbesondere eine Mini-USB-Schnittstelle ist.

Gemäß einer Variante der Erfindung, welche sich dadurch auszeichnet, dass keine Steckverbindung zwischen den Schnittstellen zur Datenübertragung erforderlich ist, sieht vor, dass die Schnittstelle zur Verbindung mit dem externen Datenverarbeitungsgerät eine Funkschnittstelle ist. Die Datenübertragung zwischen dem Adapter und dem externen Datenverarbeitungsgerät kann hierbei gemäß bekannten Funknetzstandards, wie beispielsweise Bluetooth, ZigBee, etc., erfolgen. Alternativ kann der Adapter aber auch eine Infrarotschnittstelle zum Datenaustausch mit dem externen Datenverarbeitungsgerät aufweisen.

Eine weitere Ausführungsform des erfindungsgemäßen Adapters sieht vor, dass die Kontaktstelle zur Verbindung mit dem Anschluss zur Datenübertragung der fernoptischen Vorrichtung als Ein-Draht-UART-Schnittstelle ausgebildet ist.

Beschädigungen des Adapters und der fernoptischen Vorrichtung durch Krafteinwirkungen lassen sich dadurch vermeiden, dass eine mechanische Verbindung zwischen der Kontaktstelle des Adapters und dem Anschluss als zerstörungsfreie Solltrennstelle ausgebildet ist.

Das dauerhafte Speichern von Daten, beispielsweise von Updates für eine Firmware der fernoptischen Vorrichtung, auf dem Adapter lässt sich dadurch erzielen, dass er einen über die Schnittstelle zur Verbindung mit dem externen Datenverarbeitungsgerät und den Anschluss zur Datenübertragung beschreibbaren und auslesbaren Massenspeicher aufweist. Auch kann auf diese Weise ein interner Speicher der fernoptischen Vorrichtung durch den Speicher des Adapters erweitert werden.

Um einem Benutzer zumindest den Verbindungsstatus zwischen der Kontaktstelle des Adapters und dem Anschluss der Vorrichtung anzuzeigen, kann der Adapter zumindest eine optische Statusanzeige aufweisen.

Darüber hinaus kann der Adapter eine optische Anzeige zur Wiedergabe von Informationen und Bedienelemente aufweisen. Dadurch wird für den Benutzer die Bedienbarkeit des Adapters erleichtert. Die Anzeige kann auch durch einen Touchscreen gebildet werden, In diesem Fall können die Bedienelemente in die Anzeige integriert sein.

Die Funktionen der fernoptischen Vorrichtung können auf einfache Weise dadurch erweitert werden, dass der Adapter einen GPS-Empfänger und/oder einen elektronischen Kompass und/oder einen Neigungssensor und/oder zumindest einen Sensor zur Erfassung zumindest einer Umgebungszustandsgröße, wie Temperatur, Luftdruck und Luftfeuchtigkeit, aufweist. Durch die Verwendung von Adaptern mit unterschiedlichen Hardware und/oder Softwarefunktionen lassen sich speziell auf Kundenbedürfnisse angepasste unterschiedliche Zusatzfunktionen realisieren.

Die erfindungsgemäße Vorrichtung kommt bei einem Verfahren der eingangs genannten Art zum Einsatz, wobei nach korrektem Einsetzen des Adapters in die fernoptische Vorrichtung eine Steuerung des Adapters eine Statusmeldung erhält, woraufhin die Vorrichtung von einer Steuerung des Adapters oder von einer Steuerung eines externen Datenverarbeitungsgerätes entweder in einen Bootmodus oder in einen Betriebsmodus versetzt wird, wobei entweder die Steuerung des Adapters oder die Steuerung des externen Datenverarbeitungsgerätes als Master für die fernoptische Vorrichtung dienen. Auf diese Weise lassen sich auf der fernoptischen Vorrichtung sowohl Software-Updates, die auf dem Adapter selbst gespeichert sind, als auch Daten auf einfache Weise zwischen der Vorrichtung und dem Adapter bzw. dem externen Datenverarbeitungsgerät austauschen. So können beispielsweise gemäß einer vorteilhaften Variante des erfindungsgemäßen Verfahrens in einem Speicher der fernoptischen Vorrichtung gespeicherte Daten, insbesondere mit der Vorrichtung aufgezeichnete Bilddaten, über den Adapter ausgelesen werden.

Gemäß einer weiteren sehr vorteilhaften Variante des erfindungsgemäßen Verfahrens können über den Adapter benutzerspezifische Parameterwerte, welche in einem Speicher des Adapters abgelegt sind, in einen Speicher der Vorrichtung übertragen und die Vorrichtung entsprechend den benutzerspezifischen Parameterwerten eingestellt werden. Anhand der benutzerspezifischen Parameterwerte, beispielsweise physiologische Eigenheiten des Benutzers betreffende Parameterwerte, wie Augenabstand, auf die Sehstärke abgestimmte Fokussierungseinstellungen, etc. und/oder bevorzugte Programmeinstellungen des Benutzers betreffende Parameterwerte, kann die fernoptische Vorrichtung auf einfache Weise bei ihrer Inbetriebnahme durch den betreffenden Benutzer in den gewünschten, benutzerspezifischen Betriebszustand gebracht werden. Die Speicherung benutzerspezifischer Geräteeinstellungen auf dem Adapter ist insbesondere deshalb ein Vorteil, da ein Benutzer seinen Adapter lediglich an eine erfindungsgemäße fernoptische Vorrichtung anstecken muss und hierbei vollautomatisch die für den Benutzer erforderlichen Einstellungen vorgenommen werden können. Hierdurch wird eine wesentliche Erhöhung des Bedienungskomforts erzielt.

Eine weitere vorteilhafte Ausführungsform der Erfindung sieht vor, dass in einem Speicher der fernoptischen Vorrichtung abgelegte Identifikationsdaten zumindest eines Benutzers mit in dem Adapter abgelegten Identifikationsdaten eines Benutzers verglichen werden, wobei ein Zugriff auf in der Vorrichtung gespeicherte Daten und/oder das Überspielen von Daten mittels des Adapters auf die Vorrichtung nur bei Übereinstimmung von in dem Adapter und in der Vorrichtung gespeicherten Identifikationsdaten zugelassen wird. Diese Variante der Erfindung ermöglicht, die Zuordnung des Fernoptischen Gerätes zu einem bestimmten Benutzer, sodass nur dieser auf die in der fernoptischen Vorrichtung gespeicherte Daten zugreifen kann. Die Zuordnung der fernoptischen Vorrichtung zu dem Benutzer kann bereits Vorort bei einem Händler erfolgen. Als Identifikationsdaten können beispielsweise biometrische Daten des Benutzers, beispielsweise ein Fingerabdruck etc., oder auch ein vorgebbarer Code sowohl in der Vorrichtung als auch in dem Adapter gespeichert werden. Diese Ausführungsform ermöglicht es auch, die Vorrichtung speziell an einen Benutzer anzupassen, wobei Änderungen an den benutzerspezifischen Einstellungen der Vorrichtung nur mittels des passenden, d.h., die entsprechenden Identifikationsdaten oder eine entsprechende Berechtigung aufweisenden Administratoradapters vorgenommen werden können.

Zum besseren Verständnis der Erfindung wird diese anhand der nachfolgenden Figuren näher erläutert.

Es zeigen jeweils in stark schematisch vereinfachter Darstellung:
- Fig. 1: eine teilweise Explosionsansicht einer erfindungsgemäßen fernoptische Vorrichtung in Draufsicht;
- Fig. 2: eine Draufsicht auf ein geöffnetes Fach zur Aufnahme eines elektrischen Energiespeichers der fernoptischen Vorrichtung aus Fig. 1;
- Fig. 3: einen in der erfindungsgemässen Vorrichtung verwendeten Adapter, welcher zum Einsetzen in das in Fig. 2 dargestellte Fach vorgesehen ist;
- Fig. 4: einen Schnitt entlang der Linie IV-IV durch den in Fig. 3 dargestellten Adapter;
- Fig. 5: ein Blockdiagramm der erfindungsgemäßen Vorrichtung mit einem Adapter und einem externen Datenverarbeitungsgerät;
- Fig. 6: eine Draufsicht auf den Adapter aus Fig. 3 aus der Richtung VI.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

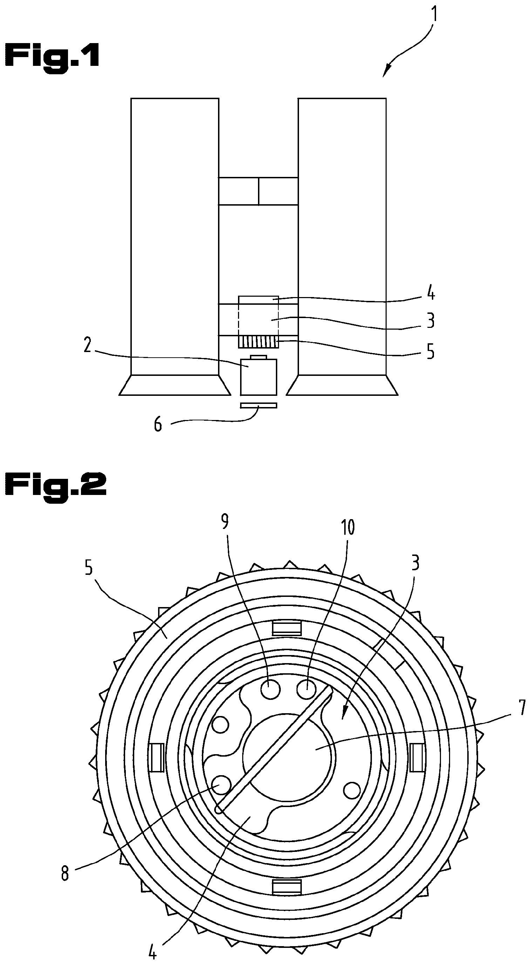

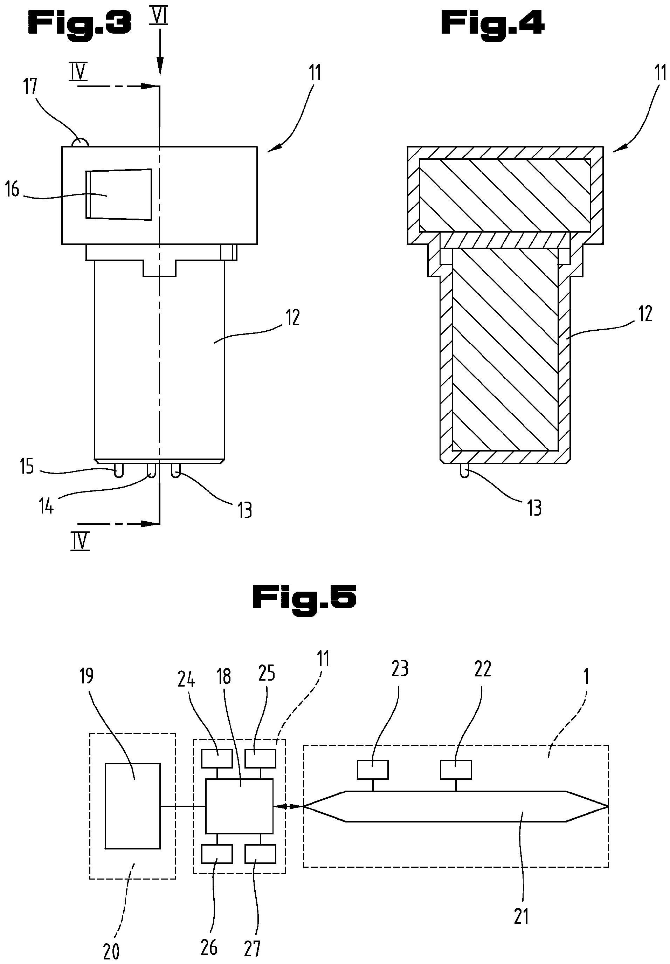

Gemäß Fig. 1 weist eine erfindungsgemäße fernoptische Vorrichtung 1, beispielsweise ein Fernglas, Teleskop, etc. mindestens einen austauschbaren elektrischen Energiespeicher 2, beispielsweise eine Batterie, zur Stromversorgung der fernoptischen Vorrichtung 1 auf. Die Vorrichtung 1 weist interne von dem Energiespeicher 2 gespeiste Verbraucher, wie beispielsweise ein Entfernungsmessgerät, Nachtsichtvorrichtungen, eine Gerätesteuerung etc. auf. Insbesondere kann die Vorrichtung einen oder mehrere Speicher zur Aufzeichnung von Daten aufweisen. Weiters kann in der Vorrichtung 1 ein in Fig. 5 mit dem Bezugszeichen 21 bezeichnetes Bussystem vorgesehen sein.

Der Energiespeicher 2 ist in einem verschließbaren, elektrische Anschlüsse aufweisenden Fach 3 der Vorrichtung 1 angeordnet. Das Fach 3 kann mit einem Deckel 6 verschlossen werden. Bevorzugterweise kann der Deckel 6 mit dem Fach 3 verschraubt werden.

Weiters ist in dem Fach 3 ein Anschluss 4 zur Datenübertragung an ein externes in Fig. 5 mit dem Bezugszeichen 20 versehene Datenverarbeitungsgerät angeordnet. Der Anschluss 4 kann mit dem Bussystem der Vorrichtung 1 verbunden sein.

Das Fach 3 kann eine sackförmige Form aufweisen, wobei der Anschluss 4 zur Datenübertragung an einem Bodenteil des Faches 4 angeordnet sein kann. Genauer gesagt, kann der Anschluss 4 zur Datenübertragung an einem einer Einschuböffnung für den Energiespeicher 2 diametral gegenüberliegenden Boden des Fachs 3 angeordnet sein.

Wie aus Fig. 1 weiters ersichtlich ist, kann das Fach 3 direkt in einem Betätigungselement 5 zur Beeinflussung einer optischen Stellgröße angeordnet sein. Somit kann der Energiespeicher 2 in dem Betätigungselement 5 angeordnet sein. Das Betätigungselement 5 kann beispielsweise ein Stellring zum Zoomen sein. Bevorzugterweise ist das Fach 3 als verschließbares Fach in einem Fokussierknopf der fernoptischen Vorrichtung angeordnet.

In der Anordnung des Energiespeichers 2 in dem Betätigungselement 5 bzw. in dem Fokussierknopf selbst kann auch ohne Anordnung des Anschlusses 4 zur Datenübertragung für sich eine erfinderische Lösung gesehen werden. Der Fokussierknopf kann beispielsweise zweiteilig ausgeführt sein, so kann er eine Abdeckung und eine Aufnahme für den Energiespeicher 2 aufweisen. Die Aufnahme kann durch einen zylinderförmigen Hohlkörper gebildet sein, der mit der Abdeckung, welche ebenfalls zylinderförmig ausgebildet sein kann, verschlossen werden. Die Abdeckung bzw. die Aufnahme können miteinander korrespondierende Gewinde aufweisen, um den Fokussierknopf fest zu verschließen. Alternativ können die Abdeckung und der Fokussierknopf durch einen Bajonettverschluss miteinander verbunden sein. An dieser Stelle sei angemerkt, dass auch andere Verbindungsformen, welche ein Lösen der Abdeckung von der Aufnahme bei Betätigen des Fokussierkopfes verhindern, möglich sind. Die soeben besprochenen Ausführungsformen haben den Vorteil, dass sich die Batterie leicht aus dem Fokussierknopf herausnehmen und wechseln lässt. In dem Fokussierknopf befinden sich Kontakte zur elektrischen Kontaktierung des Energiespeichers 2 bzw. der Batterie. Die elektrischen Kontaktierungen der Batterie können aus dem Fokussierknopf in radialer und/oder axialer Richtung herausgeführt sein. Bei den elektrischen Kontaktierungen, kann es sich beispielsweise um Drähte oder um flächenförmige Strukturen aus leitenden Materialen handeln.

Der Fokussierknopf kann derart dimensioniert sein, dass die Batterie, beispielsweise in Form einer Knopfzelle oder Stabbatterie, im Wesentlichen spielfrei in seinem Inneren aufgenommen ist. Weiters hinaus können in dem Fokussierknopf Dämpfungselemente, beispielsweise aus Gummi oder einem anderen elastomeren Material angeordnet sein, um Beschädigungen des Fokussierknopfes durch die Batterie bei einem Stoß zu verhindern. Auch kann zwischen der Abdeckung und der Aufnahme mindestens ein Abdichtelement angeordnet sein, beispielsweise in Form eines O-Ringes, um einen Schutz vor Wasser oder Verschmutzungen zu gewährleisten. An dieser Stelle sei darauf hingewiesen, dass anstelle eines einzigen Energiespeichers 2 oder einer einzigen Batterie auch mehrere Energiespeicher 2 bzw. Batterien in dem Fokussierknopf bzw. Betätigungselement 5 angeordnet sein können.

Gemäß Fig. 2 kann der Anschluss 4 zur Datenübertragung bevorzugterweise als eine Ein-Draht-UART-Schnittstelle ausgebildet sein. In dem dargestellten Fall weist der Anschluss 4 eine Kontaktstelle 7 für eine stromführende Ader, die auch zur Datenübertragung dienen kann, sowie eine Kontaktstelle 8 für eine Masse auf. Neben den Kontaktstellen 7 und 8 können je nach Ausführungsform noch weitere Kontaktstellen 9, 10 vorgesehen sein. Alternativ zur Ausbildung der Anschlusses 4 als Ein-Draht-UART-Schnittstelle kann der Anschluss 4 auch als USB-Schnittstelle ausgebildet sein. An dieser Stelle sei jedoch darauf hingewiesen, dass der Anschluss 4 auch durch andere als die hier erwähnten Schnittstellen zur Datenübertragung realisiert werden kann.

Nach Entfernen des Energiespeichers 2 aus dem Fach 3 kann in dieses anstelle des Energiespeichers ein in Fig. 3 näher dargestellter erfindungsgemäßer Adapter 11 eingesetzt werden.

Das Fach 3 mit dem Anschluss 4 und der Adapter 11 bilden hierbei eine Schnittstelle zur Datenübertragung der fernoptischen Vorrichtung 1. Der Adapter 11 ist zum Datenaustausch mit zumindest einer Steuerung und/oder zumindest einem Speicher der fernoptischen Vorrichtung ausgebildet. Über den Adapter kann die fernoptische Vorrichtung gemäß einer Variante der Erfindung mit Energie versorgt werden. So kann der Adapter eine interne Batterie oder einen Akku zur Stromversorgung der fernoptischen Vorrichtung aufweisen und/oder eine Schnittstelle zu einer externen Stromversorgung bilden. Bevorzugterweise kann der Adapter als Ackupack mit einem Ladestecker ausgebildet sein. Die Stromversorgung der fernoptischen Vorrichtung kann aber beispielsweise auch durch Verbinden des Adapters mit einer USB-Schnittstelle eines Computers oder einer anderen externen Stromquelle erfolgen.

Gemäß Fig. 3 weist der Adapter 11 ein formstabiles Gehäuse mit zumindest einer Führungsfläche zur Führung des Adapters 11 an der fernoptischen Vorrichtung 1 während eines Verbindens mit dem Anschluss 4 auf. Die äußere Form des Adapters 11 kann somit durch das formstabile Gehäuse bestimmt sein. Die Führungsfläche wird in der hier dargestellten Variante der Erfindung durch einen in das Fach 3 einsetzbaren Abschnitt 12 gebildet. Weiters kann der Adapter 11 an dem in das Fach 3 einsetzbaren Abschnitt 12 Kontaktstellen 13, 14, 15 zur Verbindung mit dem Anschluss 4 zur Datenübertragung und eine Schnittstelle 16 zur Verbindung mit dem in Fig. 5 mit dem Bezugszeichen 20 versehenen externen Datenverarbeitungsgerät aufweisen. Die Schnittstelle 16 ist bevorzugterweise als USB Schnittstelle, insbesondere als Mini-USB-Schnittstelle ausgebildet, wobei jedoch grundsätzlich auch andere geeignete Schnittstellen, wie beispielsweise Funk- oder Infrarotschnittstellen zur drahtlosen Kommunikation, zum Einsatz kommen können.

Wie aus Fig. 3 weiters ersichtlich, können sowohl die Kontaktstellen 13, 14, 15 als auch die Schnittstelle 16 zu dem externen Datenverarbeitungsgerät 20 an dem formstabilen Gehäuse des Adapters 11 angeordnet sein.

Wie aus einer Zusammenschau der Figuren 2 und 3 zu entnehmen ist, kann die äußere Kontur des in das Fach 3 einsetzbaren Abschnittes 12 des Adapters 11 kongruent zur Form des Faches 3 ausgebildet sein. Gemäß dieser Ausführungsform entspricht der Abschnitt 12 somit einer negativen Form des Faches 3.

Wie neben Figur 3 auch aus Figur 4 ersichtlich ist, kann der Adapter 11 einen Grundkörper mit einem im wesentlichen T-förmigen Querschnitt aufweisen. An den in das Fach 3 einsetzbaren Abschnitt 12 schließt hierbei ein über diesen Abschnitt seitlich vorspringender Kopf an. Der Kopf kann in einem in das Fach 3 eingesetzten Zustand des Adapters 11 außerhalb des Faches angeordnet sein. Eine Unterkante des Kopfes kann hierbei an einer Oberkante des Faches 3 anliegen und dieses abschließen. Der Kopf liegt von den Kontaktstelle 13, 14, 15 aus betrachtet hinter der Führungsfläche, d.h. hinter dem Abschnitt 12 und bildet gleichzeitig einen Halteabschnitt zum Angreifen des Adapters 11.An dieser Stelle sei jedoch angemerkt, dass der Halteabschnitt nicht unbedingt durch den Kopf gebildet werden muss. Vielmehr kann der Halteabschnitt auch durch ein Schlaufe oder nur durch einen in einem montierten Zustand des Adapters 11 aus dem Fach 3 herausragenden und somit greifbaren Abschnitt beliebiger Formgebung gebildet sein.

Aus Gründen der einfacheren Zugänglichkeit kann die Schnittstelle 16, wie in Fig. 3 dargestellt, an dem Kopf bzw. an dem Halteabschnitt des Gehäuses angeordnet sein.

Wie aus Fig. 3 und 4 weiters ersichtlich ist, können die Kontaktstellen 13, 14, 15 an einer Stirnseite des in das Fach 3 einsetzbaren Abschnittes 12 des Adapters 11 angeordnet sein. Die Kontaktstellen 13, 14, 15 können bei entsprechender Ausführung des Anschlusses 4 der fernoptischen Vorrichtung Teil einer Ein-Draht-UART-Schnittstelle sein. Bei dieser Ausführungsform der Erfindung können in dem Fach 3 vorhandene elektrische Kontakte zur elektrischen Kontaktierung des Energiespeichers 2 auch als Anschluss 4 zur Datenübertragung zwischen dem Adapter und der zumindest einen Steuerung und/oder dem zumindest einem Speicher der fernoptischen Vorrichtung Verwendung finden.

Eine Verbindung zwischen der zumindest einen Kontaktstelle 13, 14, 15 des Adapters 11 und dem Anschluss 4 kann als zerstörungsfreie Solltrennstelle ausgebildet sein. Die zerstörungsfreie Solltrennstelle lässt sich beispielsweise durch neben den Kontaktstellen 13, 14, 15 angeordnete Permanentmagneten und entsprechende Gegenstücke aus Metall oder Magnete umgekehrter Polarität in dem Fach 3 realisieren. Bei Überschreitung einer durch die Magneten erzeugten und dieser entgegen gesetzten Haltekraft kann ein Lösen der Verbindung erzielt werden, ohne eine mechanische Beschädigung der Schnittstelle zu verursachen.

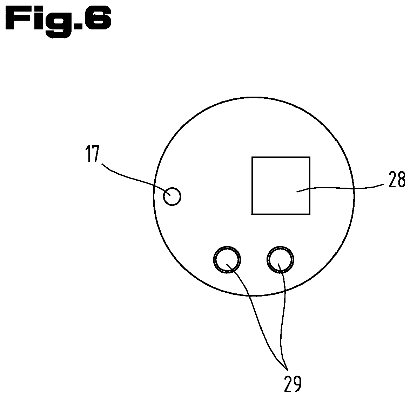

Weiters kann der Adapter, wie aus Fig. 3 ersichtlich ist, eine optische Statusanzeige 17, beispielsweise in Form einer oder mehrerer LEDs aufweisen. Auf diese Weise lässt sich ein Verbindungsstatus zwischen der Kontaktstelle 13, 14, 15 des Adapters 11 und dem Anschluss 4 der Vorrichtung 1 anzeigen. Somit kann ein Benutzer auf einfache Wiese, beispielsweise eine Fehlfunktion oder eine aktive Datenübertragung zwischen dem Adapter 11 und der Vorrichtung 1 erkennen. Darüber hinaus kann der Adapter eine optische Anzeige zur Wiedergabe von Informationen und entsprechende Bedienelemente zur Vornahme von Eingaben durch einen Benutzer aufweisen. Diese Anzeige ist bevorzugterweise an einer vorderen, in einem eingebauten Zustand dem Benutzer zugewandten Stirnfläche des Adapters 11 angeordnet. In Fig. 6 ist eine Draufsicht auf die Stirnseite des Adapters 11 dargestellt, wobei die optische Anzeige mit dem Bezugszeichen 28 und die Bedienelemente, welche beispielsweise als Druckknöpfe ausgebildet sein können, mit dem Bezugszeichen 29 versehen sind.

Weiters kann der Adapter 11 einen GPS-Empfänger und/oder einen elektronischen Kompass und/oder einen Neigungssensor und/oder zumindest einen Sensor zur Erfassung zumindest einer Umgebungszustandsgröße, wie Temperatur, Luftdruck und Luftfeuchtigkeit, aufweisen. Auf diese Weise lässt sich der Funktionsumfang der fernoptischen Vorrichtung auf einfache Weise mithilfe des Adapters 11 erweitern.

Gemäß Fig. 5 kann bei einem erfindungsgemäßen Verfahren zum Betrieb der fernoptischen Vorrichtung 1 mit dem Adapter 11 nach korrektem Einsetzen des Adapters 11 in die fernoptische Vorrichtung 1 eine Steuerung 18 des Adapters 11 von der Vorrichtung 1 eine entsprechende Statusmeldung erhalten. Die Steuerung 18 kann beispielsweise als entsprechend programmierter Mikroprozessor ausgebildet sein. Hierauf kann die Vorrichtung 1 von der Steuerung 18 des Adapters 11 oder von einer Steuerung 19 des externen optional mit dem Adapter 11 verbundenen Datenverarbeitungsgerätes 20 entweder in einen Bootmodus oder in einen Betriebsmodus versetzt werden. Hierbei dient entweder die Steuerung 18 des Adapters 11 oder die Steuerung 19 des externen Datenverarbeitungsgerätes 20 als Master für das Bussystem 21 der fernoptischen Vorrichtung 1.

In weiterer Folge können in einem Speicher 22 der fernoptischen Vorrichtung 1 gespeicherte Daten, insbesondere mit der Vorrichtung 1 aufgezeichnete Bilddaten, über den Adapter 11 ausgelesen werden. Darüber hinaus können über den Adapter 11 benutzerspezifische Parametereinstellungen, welche in einem Speicher des Adapters 11 abgelegt sind, in den Speicher 22 der Vorrichtung 1 übertragen werden. Die Vorrichtung 1 kann dann entsprechend den benutzerspezifischen Parametereinstellungen bzw. Parameterwerten eingestellt werden. Dies kann beispielsweise durch eine Steuerung der Vorrichtung 1 erfolgen. Diese Steuerung kann beispielsweise Motoren der Vorrichtung 1 betätigen, welche Elemente der Vorrichtung 1 in die entsprechende Position verfahren. So kann beispielsweise der Abstand zwischen einem rechten und linken Okular eines binokularen Fernrohrs automatisch anhand der Parameterwerte eingestellt werden.

Weiters kann die Vorrichtung 1 einen Motor 23 aufweisen, der Schärfeeinstellungen, insbesondere eine Sehschärfeneinstellung der Vorrichtung 1, anhand von in dem Adapter 11 gespeicherten Werten vornimmt. Mittels des Motors 23 kann beispielsweise eine Okularlinse eines optischen Systems der Vorrichtung 1 entsprechend den gespeicherten Werten, beispielsweise Dioptrienwerten eines Benutzers, verschoben werden. Auf diese Weise kann nach Anstecken des Adapters 11 an die Vorrichtung 1 die Vorrichtung 1 automatisch an die Sehschärfe des Benutzers angepasst werden.

In dem Speicher 22 der fernoptischen Vorrichtung 1 können auch Identifikationsdaten zumindest eines Benutzers gespeichert sein. Diese Identifikationsdaten können nach Anstecken des Adapters 11 an die Vorrichtung 1 mit in dem Adapter 11 abgelegten Identifikationsdaten eines Benutzers verglichen werden. Ein Zugriff auf in der Vorrichtung 1 gespeicherte Daten, beispielsweise aufgezeichnete Bilddaten, und/oder das Überspielen von Daten mittels des Adapters 11 auf die Vorrichtung 1 ist vorzugsweise nur bei Übereinstimmung von in dem Adapter 11 und in der Vorrichtung 1 gespeicherten Identifikationsdaten möglich.

Der Adapter 11 kann, wie bereits oben erwähnt, auch zusätzliche Bauteile und Sensoren, wie beispielsweise einen GPS-Empfänger 24 und/oder einen elektronischen Kompass 25 und/oder einen Neigungssensor 26 und/oder zumindest einen Sensor 27 zur Erfassung zumindest einer Umgebungszustandsgröße, wie Temperatur, Luftdruck und Luftfeuchtigkeit, aufweisen. Die mithilfe dieser zusätzlichen Bauteile und Sensoren gewonnenen Daten können in dem Speicher 22 oder in einem internen Speicher des Adapters 11 aufgezeichnet werden. Weiters kann ein Betrieb der Vorrichtung 1 unter Berücksichtigung der zusätzlichen Daten erfolgen. So kann beispielsweise ein in der Vorrichtung 1 oder dem Adapter 11 ablaufendes Ballistikprogramm anhand von Entfernung, Neigung und gegebenenfalls Luftdruck, Luftfeuchtigkeit und Temperatur einen Geschossabfall berechnet und eine korrigierte Entfernung bzw. eine Verstellung eines Höhenturms der Vorrichtung 1 ausgibt, falls diese als Zielfernrohr ausgebildet ist.

Die Ausführungsbeispiele zeigen mögliche Ausführungsvarianten der erfindungsgemäßen Vorrichtung bzw. des darin verwendeten Adapters. Die Erfindung wird durch die beigefügten Ansprüche definiert.

Der Ordnung halber sei auch abschließend darauf hingewiesen, dass zum besseren Verständnis des Aufbaus der erfindungsgemäßen Vorrichtung bzw. des erfindungsgemäßen Adapters diese bzw. deren Bestandteile teilweise unmaßstäblich und/oder vergrößert und/oder verkleinert dargestellt wurden.

### Bezugszeichenaufstellung

- 1: fernoptische Vorrichtung
- 2: Energiespeicher
- 3: Fach
- 4: Anschluss
- 5: Betätigungselement

- 6: Abdeckung
- 7: Kontakt für Datenader
- 8: Kontakt für Masse
- 9: Kontakt
- 10: Kontakt

- 11: Adapter
- 12: Abschnitt
- 13: Kontaktstelle
- 14: Kontaktstelle
- 15: Kontaktstelle

- 16: Schnittstelle
- 17: Statusanzeige
- 18: Steuerung
- 19: Steuerung
- 20: Datenverarbeitungsgerät

- 21: Bussystem
- 22: Speicher
- 23: Motor
- 24: GPS-Empfänger
- 25: elektronischer Kompass

- 26: Neigungssensor
- 27: Sensor
- 28: optische Anzeige
- 29: Bedienelemente

## Patentansprüche

1. Fernoptische Vorrichtung (1) mit zumindest einem austauschbaren elektrischen Energiespeicher (2) zur Stromversorgung der fernoptischen Vorrichtung (1), wobei der Energiespeicher (2) in einem verschließbaren, elektrische Kontakte aufweisenden Fach (3) der Vorrichtung (1) angeordnet ist, **dadurch gekennzeichnet, dass** sie einen anstelle des Energiespeichers (2) in das Fach (3) einsetzbaren Adapter (11) umfasst, welcher zum Datenaustausch mit zumindest einer Steuerung oder zumindest einem Speicher (22) der fernoptischen Vorrichtung ausgebildet ist, wobei in dem Fach (3) ein Anschluss (4) für eine Datenübertragung angeordnet ist, wobei das Fach eine sackförmige Form aufweist, wobei der Anschluss (4) zur Datenübertragung an einem einer Einschuböffnung für den Energiespeicher (2) diametral gegenüberliegenden Boden des Fachs (3) angeordnet ist, wobei der Adapter (11) zumindest eine Kontaktstelle (13, 14, 15) für den Anschluss (4) der fernoptischen Vorrichtung und weiters zumindest eine Schnittstelle (16) zur Verbindung mit einem externen Datenverarbeitungsgerät (20) und ein im wesentlichen formstabiles Gehäuse mit zumindest einer Führungsfläche zur Führung des Adapters (11) an der fernoptischen Vorrichtung (1) während eines Verbindens mit dem Anschluss (4) aufweist, wobei der Adapter (11) von der zumindest einen Kontaktstelle (13, 14, 15) aus betrachtet einen hinter der Führungsfläche angeordneten Halteabschnitt zum Angreifen des Adapters (11) aufweist, wobei die Führungsfläche Teil der Oberfläche eines in das Fach (3) einsetzbaren Abschnitts (12) des Adapters (11) ist, und die zumindest eine Kontaktstelle (13, 14, 15) zur Verbindung mit dem Anschluss (4) zur Datenübertragung der fernoptischen Vorrichtung (1) an dem in das Fach (3) einsetzbaren Abschnitt (12) angeordnet ist, wobei die zumindest eine Kontaktstelle (13, 14, 15) an einer Stirnseite des in das Fach (3) einsetzbaren Abschnittes (12) des Adapters (11) angeordnet ist.

2. Fernoptische Vorrichtung nach Anspruch 1, **dadurch gekennzeichnet, dass** die Vorrichtung (1) ein mit dem Anschluss (4) verbundenes Bussystem (21) aufweist.

3. Fernoptische Vorrichtung nach einem der Ansprüche 1 oder 2, **dadurch gekennzeichnet, dass** der Anschluss (4) als eine Ein-Draht-UART-Schnittstelle ausgebildet ist.

4. Fernoptische Vorrichtung nach einem der vorhergehenden Ansprüche, **dadurch gekennzeichnet, dass** das Fach (3) als verschließbares Fach in einem Fokussierknopf der fernoptischen Vorrichtung angeordnet ist.

5. Fernoptische Vorrichtung nach einem der Ansprüche 1 bis 4, **dadurch gekennzeichnet, dass** sie einen Motor (23) zur Veränderung von Schärfeeinstellungen der fernoptischen Vorrichtung (1) aufweist.

6. Fernoptische Vorrichtung nach einem der Ansprüche 1 bis 5, **dadurch gekennzeichnet, dass** sie dazu eingerichtet ist, Funktionen, welche in dem Adapter (11) als Software implementiert oder mittels zumindest einer elektronischen Schaltung realisiert sind, auszuführen oder dass der Adapter (11) als Akku Pack ausgebildet ist.

7. Fernoptische Vorrichtung nach einem der Ansprüche 1 bis 6, **dadurch gekennzeichnet, dass** die äußere Kontur des in das Fach (3) einsetzbaren Abschnittes (12) einer negativen Form des Faches (3) entspricht.

8. Fernoptische Vorrichtung nach einem der Ansprüche 1 bis 7, **dadurch gekennzeichnet, dass** der Adapter einen Grundkörper mit einem im wesentlichen T-förmigen Querschnitt aufweist.

9. Fernoptische Vorrichtung nach einem der Ansprüche 1 bis 8, **dadurch gekennzeichnet, dass** die Schnittstelle (16) zur Verbindung mit dem externen Datenverarbeitungsgerät eine USB Schnittstelle ist.

10. Fernoptische Vorrichtung nach einem der Ansprüche 1 bis 9, **dadurch gekennzeichnet, dass** die Schnittstelle (16) zur Verbindung mit dem externen Datenverarbeitungsgerät eine Funk- oder Infrarotschnittstelle ist.

11. Fernoptische Vorrichtung nach einem der Ansprüche 1 bis 10, **dadurch gekennzeichnet, dass** die zumindest eine Kontaktstelle (13, 14, 15) zur Verbindung mit dem Anschluss (4) zur Datenübertragung der Vorrichtung (1) als Ein-Draht-UART-Schnittstelle ausgebildet ist.

12. Fernoptische Vorrichtung nach einem der Ansprüche 1 bis 11, **dadurch gekennzeichnet, dass** eine mechanische Verbindung zu dem Anschluss (4) als zerstörungsfreie Solltrennstelle ausgebildet ist.

13. Fernoptische Vorrichtung nach einem der Ansprüche 1 bis 12, **dadurch gekennzeichnet, dass** der Adapter einen über die Schnittstelle (16) zur Verbindung mit dem externen Datenverarbeitungsgerät und den Anschluss (4) zur Datenübertragung beschreibbaren und auslesbaren Massenspeicher aufweist.

14. Fernoptische Vorrichtung nach einem der Ansprüche 1 bis 13, **dadurch gekennzeichnet, dass** der Adapter zumindest eine optische Statusanzeige (17) aufweist, um zumindest den Verbindungsstatus zwischen der zumindest einen Kontaktstelle (13, 14, 15) des Adapters (11) und dem Anschluss (4) der Vorrichtung (1) anzuzeigen.

15. Fernoptische Vorrichtung nach einem der Ansprüche 1 bis 14, **dadurch gekennzeichnet, dass** der Adapter eine optische Anzeige (28) zur Wiedergabe von Informationen und/oder Bedienelemente (29) aufweist.

16. Verfahren zum Betrieb einer fernoptischen Vorrichtung (1) nach einem der Ansprüche 1 bis 15 , wobei nach korrektem Einsetzen des Adapters (11) in die fernoptische Vorrichtung (1) eine Steuerung des Adapters (11) eine Statusmeldung erhält, woraufhin die Vorrichtung (1) von einer Steuerung (18) des Adapters (11) oder von einer Steuerung (19) eines externen Datenverarbeitungsgerätes (20) entweder in einen Bootmodus oder in einen Betriebsmodus versetzt wird, wobei entweder die Steuerung (18) des Adapters (11) oder die Steuerung (19) des externen Datenverarbeitungsgerätes (20) als Master für die fernoptische Vorrichtung (1) dienen.

17. Verfahren nach Anspruch 16, **dadurch gekennzeichnet, dass** in einem Speicher (22) der fernoptischen Vorrichtung (1) gespeicherte Datenüber den Adapter (11) ausgelesen werden.

18. Verfahren nach Anspruch 16 oder 17, **dadurch gekennzeichnet, dass** über den Adapter (11) benutzerspezifische Parametereinstellungen, welche in einem Speicher des Adapters (11) abgelegt sind, in einen Speicher der Vorrichtung (1) übertragen werden und die Vorrichtung (1) entsprechend den benutzerspezifischen Parameterwerten eingestellt wird.

19. Verfahren nach einem der Ansprüche 16 bis 18, **dadurch gekennzeichnet, dass** in einem Speicher der fernoptischen Vorrichtung (1) abgelegte Identifikationsdaten zumindest eines Benutzers mit in dem Adapter (11) abgelegten Identifikationsdaten eines Benutzers verglichen werden, wobei ein Zugriff auf in der Vorrichtung (1) gespeicherte Daten oder das Überspielen von Daten mittels des Adapters (11) auf die Vorrichtung (1) nur bei Übereinstimmung von in dem Adapter (11) und in der Vorrichtung (1) gespeicherten Identifikationsdaten zugelassen wird.

## Claims

1. A long-range optical device (1) with at least one replaceable electrical energy storage (2) for supplying power to the long-range optical device (1), wherein the energy storage (2) is arranged in a closable compartment (3) of the device (1) comprising electrical contacts, **characterized in that** it comprises an adapter (11) which can be inserted into the compartment (3) instead of the energy storage (2), said adapter (11) being configured for data exchange with at least one controller or at least one memory (22) of the long-range optical device, wherein an interface (4) for data transmission is arranged in the compartment (3), wherein the compartment is sack-shaped, wherein the interface (4) for data transmission is arranged on a base of the compartment (3) diametrically opposite an insertion opening for the energy storage (2), wherein the adapter (11) comprises at least one junction (13, 14, 15) for the interface (4) of the long-range optical device and also at least one interface (16) for connecting to an external data processing device (20) and an essentially dimensionally-stable housing with at least one guide surface for guiding the adapter (11) on the long-range optical device (1) whilst a connection to the interface (4) is being established, wherein the adapter (11) has a holding portion for gripping the adapter (11) which is arranged behind the guide surface as viewed from the at least one junction (13, 14, 15), wherein the guide surface is part of the surface of a portion (12), which can be inserted into the compartment (3), of the adapter (11), and the at least one junction (13, 14, 15) for connection to the interface (4) for data transmission of the long-range optical device (1) is arranged on the portion (12) which can be inserted into the compartment (3), wherein the at least one junction (13, 14, 15) is arranged on an end face of the portion (12) of the adapter (11) which can be inserted into the compartment (3).

2. The long-range optical device according to claim 1, **characterized in that** the device (1) comprises a bus system (21) connected to the interface (4).

3. The long-range optical device according to one of claims 1 or 2, **characterized in that** the interface (4) is provided in the form of a single-wire UART interface.

4. The long-range optical device according to one of the preceding claims, **characterized in that** the compartment (3) is arranged in a focusing knob of the long-range optical device as a closable compartment.

5. The long-range optical device according to one of claims 1 to 4, **characterized in that** it comprises a motor (23) for changing sharpness settings of the long-range optical device (1).

6. The long-range optical device according to one of claims 1 to 5, **characterized in that** it is adapted for executing functions, which - in the adapter (11) - are realized as software or by means of at least one electronic circuit, or that the adapter (11) is designed as a battery pack.

7. The long-range optical device according to one of claims 1 to 6, **characterized in that** the outer contour of the portion (12), which can be inserted into the compartment (3), has a shape corresponding to a negative shape of the compartment (3).

8. The long-range optical device according to one of claims 1 to 7, **characterized in that** the adapter comprises a base body with an essentially T-shaped cross-section.

9. The long-range optical device according to one of claims 1 to 8, **characterized in that** the interface (16) for connecting to the external data processing device is a USB interface.

10. The long-range optical device according to one of claims 1 to 9, **characterized in that** the interface (16) for connecting to the external data processing device is a radio or infrared interface.

11. The long-range optical device according to one of claims 1 to 10, **characterized in that** the at least one junction (13, 14, 15) for connecting to the interface (4) for data transmission of the device (1) is provided in the form of a single-wire UART interface.

12. The long-range optical device according to one of claims 1 to 11, **characterized in that** a mechanical connection to the interface (4) is provided in the form of a non-destructive target separation point.

13. The long-range optical device according to one of claims 1 to 12, **characterized in that** the adapter comprises a mass memory that is writeable and readable via the interface (16) for connecting to the external data processing device and the interface (4) for data transmission.

14. The long-range optical device according to one of claims 1 to 13, **characterized in that** the adapter comprises at least one optical status display (17) so as to display at least the connection status between the at least one junction (13, 14, 15) of the adapter (11) and the interface (4) of the device (1).

15. The long-range optical device according to one of claims 1 to 14, **characterized in that** the adapter comprises an optical display (28) for displaying information and/or control elements (29).

16. A method for operating a long-range optical device (1) according to one of claims 1 to 15, wherein after correct insertion of the adapter (11) into the long-range optical device (1), a controller of the adapter (11) receives a status report, whereupon the device (1) is put either into a boot mode or into an operating mode by a controller (18) of the adapter (11) or by a controller (19) of an external data processing device (20), wherein either the controller (18) of the adapter (11) or the controller (19) of the external data processing device (20) serves as master for the long-range optical device (1).

17. The method according to claim 16, **characterized in that** data stored in a memory (22) of the long-range optical device (1) is read out via the adapter (11).

18. The method according to claim 16 or 17, **characterized in that** user-specific parameter settings, which are stored in a memory of the adapter (11), are transferred into a memory of the device (1) via the adapter (11) and the device (1) is set in accordance with the user-specific parameter values.

19. The method according to one of claims 16 to 18, **characterized in that** identification data of at least one user stored in a memory of the long-range optical device (1) is compared with identification data of a user stored in the adapter (11), wherein access to data stored in the device (1) or copying of data to the device (1) by means of the adapter (11) is not permitted unless there is a match between identification data stored in the adapter (11) and in the device (1).

## Revendications

1. Dispositif de téléoptique (1) avec au moins un accumulateur d'énergie électrique (2) interchangeable pour l'alimentation électrique du dispositif de téléoptique (1), l'accumulateur d'énergie (2) étant disposé dans un compartiment (3) du dispositif (1), comprenant des contacts électriques verrouillables, **caractérisé en ce qu'**il comprend un adaptateur (11), pouvant être inséré dans le compartiment (3) à la place de l'accumulateur d'énergie (2), qui est conçu pour l'échange de données avec au moins une commande ou au moins une mémoire (22) du dispositif de téléoptique, moyennant quoi, dans le compartiment (3), est disposé un raccordement (4) pour une transmission de données, le compartiment présentant la forme d'un sac, le raccordement (4) pour la transmission de données étant disposé sur un fond du compartiment (3) diamétralement opposé à une ouverture d'insertion pour l'accumulateur d'énergie (2), l'adaptateur (11) comprenant au moins un point de contact (13, 14, 15) pour le raccordement (4) du dispositif de téléoptique et en outre au moins une interface (16) pour la liaison avec un appareil de traitement de données (20) et un boîtier globalement indéformable avec au moins une surface de guidage pour le guidage de l'adaptateur (11) le long du dispositif de téléoptique (1) pendant une liaison avec le raccordement (4), l'adaptateur (11) comprenant une portion de maintien disposée derrière la surface de guidage, vue à partir de l'au moins un point de contact (13, 14, 15), pour l'emboîtement de l'adaptateur (11), la surface de guidage faisant partie de la surface d'une portion (12) de l'adaptateur (11) pouvant être insérée dans le compartiment (3) et l'au moins un point de contact (13, 14, 15) étant disposé, pour la liaison avec le raccordement (4) pour la transmission de données du dispositif de téléoptique (1), sur la portion (12) pouvant être insérée dans le compartiment (3), l'au moins un point de contact (13, 14, 15) étant disposé sur une face frontale de la portion (12) de l'adaptateur (11) pouvant être insérée dans le compartiment (3).

2. Dispositif de téléoptique selon la revendication 1, **caractérisé en ce que** le dispositif (1) comprend un système de bus (21) relié avec le raccordement (4).

3. Dispositif de téléoptique selon l'une des revendications 1 ou 2, **caractérisé en ce que** le raccordement (4) est conçu comme une interface à un fil UART.

4. Dispositif de téléoptique selon l'une des revendications précédentes, **caractérisé en ce que** le compartiment (3) est disposé, en tant que compartiment verrouillable, dans un bouton de focalisation du dispositif de téléoptique.

5. Dispositif de téléoptique selon l'une des revendications 1 à 4, **caractérisé en ce qu'**il comprend un moteur (23) pour la modification des réglages de netteté du dispositif de téléoptique (1).

6. Dispositif de téléoptique selon l'une des revendications 1 à 5, **caractérisé en ce qu'**il est conçu pour exécuter des fonctions implémentées dans l'adaptateur (11) sous la forme d'un logiciel ou réalisées au moyen d'au moins un circuit électronique, ou **en ce que** l'adaptateur (11) est conçu comme un pack d'accumulateurs.

7. Dispositif de téléoptique selon l'une des revendications 1 à 6, **caractérisé en ce que** le contour externe de la portion (12) pouvant être insérée dans le compartiment (3) correspond à une forme en négatif du compartiment (3).

8. Dispositif de téléoptique selon l'une des revendications 1 à 7, **caractérisé en ce que** l'adaptateur comprend un corps de base avec une section transversale globalement en forme de T.

9. Dispositif de téléoptique selon l'une des revendications 1 à 8, **caractérisé en ce que** l'interface (16) pour la liaison avec un appareil de traitement de données externe est une interface USB.

10. Dispositif de téléoptique selon l'une des revendications 1 à 9, **caractérisé en ce que** l'interface (16) pour la liaison avec un appareil de traitement de données externe est une interface radio ou infrarouge.

11. Dispositif de téléoptique selon l'une des revendications 1 à 10, **caractérisé en ce que** l'au moins un point de contact (13, 14, 15) pour la liaison avec le raccordement (4) pour la transmission de données du dispositif (1) est conçu comme une interface à un fil UART.

12. Dispositif de téléoptique selon l'une des revendications 1 à 11, **caractérisé en ce qu'**une liaison mécanique avec le raccordement (4) est conçue comme une zone de rupture préférentielle non destructive.

13. Dispositif de téléoptique selon l'une des revendications 1 à 12, **caractérisé en ce que** l'adaptateur comprend une mémoire de masse pouvant être écrite et lue par l'intermédiaire de l'interface (16) pour la liaison avec l'appareil de traitement de données externe et du raccordement (4) pour la transmission de données.

14. Dispositif de téléoptique selon l'une des revendications 1 à 13, **caractérisé en ce que** l'adaptateur comprend au moins un affichage d'état optique (17) afin d'afficher au moins l'état de liaison entre l'au moins un point de contact (13, 14, 15) de l'adaptateur (11) et le raccordement (4) du dispositif (1).

15. Dispositif de téléoptique selon l'une des revendications 1 à 14, **caractérisé en ce que** l'adaptateur comprend un affichage optique (28) pour la représentation d'informations et/ou d'éléments de commande (29).

16. Procédé de commande d'un dispositif de téléoptique (1) selon l'une des revendications 1 à 15, moyennant quoi, après une insertion correcte de l'adaptateur (11) dans le dispositif de téléoptique (1), une commande de l'adaptateur (11) reçoit un message d'état, le dispositif (1) est alors mis, par une commande (18) de l'adaptateur (11) ou par une commande (19) d'un appareil de traitement de données externe (20), soit dans un mode d'amorçage soit dans un mode de fonctionnement, moyennant quoi soit la commande (18) de l'adaptateur (11) soit la commande (19) de l'appareil de traitement de données externe (20) servant de maître pour le dispositif de téléoptique (1).

17. Procédé selon la revendication 16, **caractérisé en ce que**, dans une mémoire (22) du dispositif de téléoptique (1), des données sont lues par l'intermédiaire de l'adaptateur (11).

18. Procédé selon la revendication 16 ou 17, **caractérisé en ce que** l'adaptateur (11) permet de transmettre des réglages de paramètres spécifiques à l'utilisateur, qui sont enregistrés dans une mémoire de l'adaptateur (11), vers une mémoire du dispositif (1) et le dispositif (1) est réglé en fonction des valeurs de paramètres spécifiques à l'utilisateur.

19. Procédé selon l'une des revendications 16 à 18, **caractérisé en ce que** les données d'identification d'au moins un utilisateur, enregistrées dans une mémoire du dispositif de téléoptique (1) sont comparées avec les données d'identification d'un utilisateur enregistrées dans l'adaptateur (11), un accès aux données enregistrées dans le dispositif (1) ou la lecture de données au moyen de l'adaptateur (11) sur le dispositif (1) n'étant autorisé que lorsque les données d'identification enregistrées dans l'adaptateur (11) et celles enregistrées dans le dispositif (1) coïncident.
